# FASCICULE DE BREVET EUROPEEN

(11) **EP 2 626 972 B1**
(45) Date de publication et mention de la délivrance du brevet: **20.04.2016**
(21) Numéro de dépôt: 13154820.8
(22) Date de dépôt: 11.02.2013
(51) Int. Cl.: H02J 11/00, H02J 3/38

(54) **Système d'alimentation électrique d'une charge, et centrale de production d'énergie électrique comprenant un tel système**
System zur elektrischen Einspeisung einer Ladung und Elektrizitätskraftwerk, das ein solches System umfasst
Power supply system for a load and electric power plant including such a system

(30) Priorité: 13.02.2012 FR 1251317
(43) Date de publication de la demande: 14.08.2013
(73) Titulaire: GE Energy Power Conversion Technology Ltd, Rugby Warwickshire CV21 1BU (GB)
(72) Inventeur: Monjean, Pascal, 59700 Marcq en Baroeul (FR); Auguste, Jérôme, 68390 Sausheim (FR)
(74) Mandataire: Serjeants LLP

(56) Documents cités:
- WO-A2-2011/092302
- US-A1- 2010 066 173
- US-A1- 2011 221 195
- LI R ET AL: "Offshore grid frequency control design for line-commutated converters high-voltage direct-current link connected wind farms", 20071210, vol. 1, no. 4, 10 décembre 2007 (2007-12-10), pages 211-219, XP006029953,

## Description

La présente invention concerne un système d'alimentation électrique d'une charge, le système comprenant:
- un convertisseur propre à être relié en entrée à une source de courant et en sortie à la charge, le convertisseur étant propre à délivrer un courant continu à la charge et à permettre la circulation du courant suivant un unique sens, depuis la source de courant vers la charge, et
- un bus de circulation d'un courant électrique, comportant une première extrémité et une deuxième extrémité.

La présente invention concerne également une centrale de production d'énergie électrique propre à être reliée à un réseau électrique et comprenant un tel système d'alimentation.

L'invention s'applique notamment aux centrales de production disposées en mer (de l'anglais *offshore*) et fournissant l'énergie électrique produite à un réseau électrique terrestre (de l'anglais *onshore*)*.*

L'invention s'applique, par exemple, aux hydroliennes, propres à générer de l'énergie électrique à partir de l'énergie hydraulique d'un courant d'eau, ou encore aux éoliennes.

On connait un tel système d'alimentation électrique du chapitre 5.3 de la thèse de Christoph MEYER, intitulée « Key Components for Future Offshore DC Grids ». Le convertisseur est un convertisseur d'un courant continu en un autre courant continu, relié en entrée à une source de courant continu et délivrant en sortie un courant continu sur le bus continu. Le convertisseur continu-continu comporte un onduleur connecté au primaire d'un transformateur, et le courant est ensuite redressé au travers d'un pont de diodes qui est unidirectionnel, le courant circulant uniquement depuis la source continue d'entrée vers le bus continu connecté en sortie du convertisseur.

Le bus continu de circulation du courant électrique est un bus dit à haute tension, présentant une tension de valeur supérieure à 1 kV. Le bus de circulation permet de relier, d'une part, la source de courant et le convertisseur disposés dans une éolienne, à un réseau électrique distant d'autre part. Le bus de circulation comporte des liaisons électriques filaires, et celles-ci présentent alors une longueur par exemple supérieure à plusieurs centaines de mètres. Le convertisseur et la source de courant sont, par exemple, disposés en mer, et le réseau électrique, auquel ils sont raccordés via le bus de circulation, est disposé à terre.

Toutefois, lorsque la source de courant ne fournit pas d'énergie, par exemple en l'absence de vent dans le cas d'une éolienne, des équipements auxiliaires tels que des capteurs, des équipements de mesure, ou encore des équipements de surveillance, ne sont plus alimentés par la source de courant, et ne peuvent également pas être alimentés via le réseau électrique de par l'unique sens de circulation du courant continu sur le bus, depuis la source vers le réseau.

WO 2011/092302 A2 et US 2011/221195 A1 représentent l'état de la technique supplémentaire.

Le but de l'invention est donc de proposer un système d'alimentation électrique permettant d'alimenter une charge lorsque la source de courant connectée en entrée du convertisseur ne fournit pas de courant, tout en n'ayant pas à déployer une liaison filaire électrique spécifique entre la charge et un réseau électrique terrestre.

A cet effet, l'invention a pour objet, un système d'alimentation du type précité, caractérisé en ce qu'il comprend en outre :
- un dispositif d'injection d'une tension additionnelle alternative en la deuxième extrémité du bus de circulation, le dispositif d'injection étant connecté à ladite deuxième extrémité, et
- un dispositif de récupération de la tension additionnelle alternative injectée, le dispositif de récupération étant connecté entre la première extrémité du bus et la charge, afin d'alimenter la charge en courant électrique, dans lequel le dispositif de récupération comporte un filtre de suppression de la composante continue d'une tension et un transformateur alternatif connecté en sortie du filtre.

Suivant d'autres aspects avantageux de l'invention, le système d'alimentation comprend une ou plusieurs des caractéristiques suivantes, prises isolément ou suivant toutes les combinaisons techniquement possibles :
- le dispositif d'injection comporte des moyens commandables de liaison électrique avec une source de tension alternative ;
- les moyens commandables de liaison comportent une liaison filaire entre la source de tension alternative et le bus de circulation, et un sectionneur mobile entre une position ouverte et une position fermée et propre à court-circuiter la liaison filaire en position fermée ;
- les moyens commandables de liaison comportent un transformateur alternatif connecté entre la source de tension alternative et le bus de circulation ;
- le dispositif d'injection comporte un onduleur de tension connecté à la deuxième extrémité du bus de circulation, l'onduleur étant propre à délivrer la tension additionnelle alternative à partir d'un réseau auquel il est destiné à être relié ;
- le filtre de suppression comporte un condensateur ;
- le système comprend en outre un dispositif de conversion de la tension additionnelle alternative en une tension continue, le dispositif de conversion étant connecté entre le dispositif de récupération et la charge, afin d'alimenter la charge en courant continu ;
- le dispositif de conversion comporte un pont de diodes connecté en sortie du dispositif de récupération ; et
- le dispositif de conversion comporte en outre un condensateur de filtrage connecté en sortie du pont de diodes.

L'invention a également pour objet une centrale de production d'énergie électrique propre à être reliée à un réseau électrique, la centrale de production comprenant:
- une génératrice de courant électrique,
- un bus de circulation du courant électrique, connecté entre la génératrice et le réseau, et
- un système d'alimentation électrique d'un équipement auxiliaire,
caractérisée en ce que le système d'alimentation est tel que défini ci-dessus, le bus de circulation connecté entre la génératrice et le réseau formant le bus du système d'alimentation.

Suivant un autre aspect avantageux de l'invention, la centrale de production comprend la caractéristique suivante :
- la centrale comprend en outre un convertisseur unidirectionnel de courant, connecté entre la génératrice et le bus de circulation, et propre à permettre la circulation du courant suivant un unique sens, depuis la génératrice vers le bus.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'une centrale de production selon l'invention, et
- la figure 2 est un schéma électrique de la centrale de la figure 1.

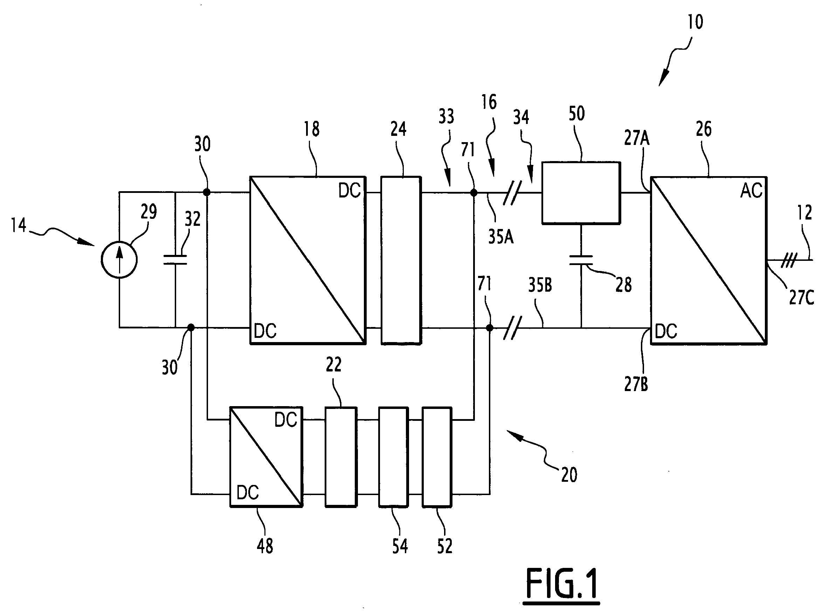

Sur la figure 1, une centrale 10 de production d'énergie électrique est reliée à un réseau électrique 12.

La centrale de production 10 comprend une génératrice 14 d'un courant électrique, un bus 16 de circulation du courant électrique entre la génératrice 14 et le réseau électrique 12, et un convertisseur principal 18 connecté entre la génératrice 14 et le bus de circulation 16. La centrale de production 10 comprend également un système 20 d'alimentation électrique d'au moins un équipement auxiliaire 22.

En complément, la centrale de production 10 comprend un filtre passif 24 connecté entre le convertisseur principal 18 et le bus de circulation 16.

En complément, lorsque le réseau électrique 12 est un réseau alternatif, la centrale de production 10 comprend un onduleur de tension 26 connecté entre le bus de circulation 16 et le réseau 12, l'onduleur 26 comportant une borne positive d'entrée 27A, une borne négative d'entrée 27B et une borne de sortie 27C pour chaque phase du réseau alternatif 12.

La centrale de production 10 comprend un condensateur d'équilibrage 28 connecté entre les bornes d'entrée 27A, 27B de l'onduleur.

La centrale de production 10 est, par exemple, une hydrolienne comportant un stator, un rotor mobile en rotation et équipé d'une pluralité de pâles, et une tuyère. L'hydrolienne est propre à transformer l'énergie cinétique d'un courant d'eau circulant à l'intérieur de la tuyère en énergie électrique, la pression du courant d'eau sur les pâles entraînant le rotor en rotation, et la rotation du rotor par rapport au stator générant une énergie électrique. L'hydrolienne est une hydrolienne sous-marine destinée à utiliser l'énergie cinétique des courants marins, ou bien est immergée dans un cours d'eau afin de convertir l'énergie hydraulique du cours d'eau en énergie électrique.

En variante, la centrale de production 10 est une éolienne comportant un stator et un rotor équipé d'une pluralité de pâles. Les courants d'air en appui sur les pâles du rotor entraînent le rotor en rotation, et la rotation du rotor par rapport au stator génère également une énergie électrique.

La centrale de production 10 est propre à délivrer, sur le bus de circulation 16, une tension de valeur supérieure à 1 kV, par exemple supérieure à 5 kV, par exemple encore supérieure à 10 kV.

La puissance électrique fournie par la centrale de production 10 au réseau 12 est supérieure à 1 MW, de préférence supérieure à 4 MW, de préférence encore supérieure à 8 MW.

Le réseau électrique 12 est, par exemple, un réseau alternatif, tel qu'un réseau triphasé. La valeur de la tension du réseau 12 est de l'ordre de 20 kV.

La génératrice 14 est une génératrice de courant continu. La génératrice 14 comporte une source de courant 29 propre à délivrer un courant continu entre des premières bornes 30, et un premier condensateur de filtrage 32 connecté en parallèle de la source de courant 29 entre les premières bornes 30.

Dans le mode de réalisation décrit, la source de courant 29 est formée par le stator, le rotor et un redresseur connecté en sortie du stator afin de convertir le courant alternatif généré par le stator en un courant continu.

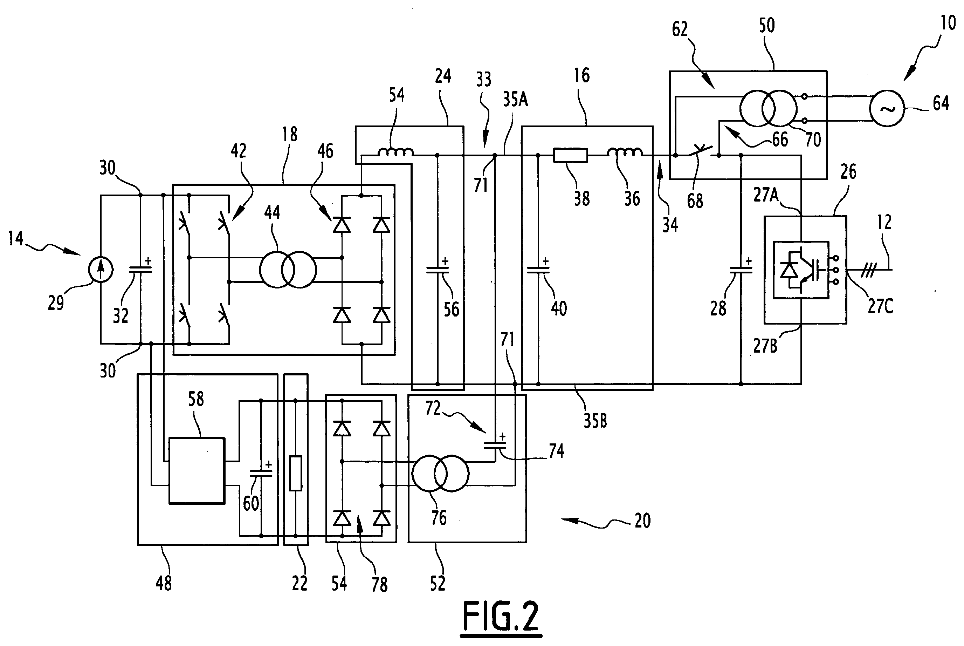

Le bus de circulation 16 présente du côté de la génératrice 14 une première extrémité 33, et du côté du réseau 12 une deuxième extrémité 34. Dans l'exemple de réalisation des figures 1 et 2, la première extrémité 33 est connectée au filtre passif 24 et la seconde extrémité 34 est connectée à l'onduleur de tension 26.

Le bus de circulation 16 comprend une liaison électrique filaire comportant deux conducteurs électriques 35A, 35B, à savoir un conducteur positif 35A et un conducteur négatif 35B. Les conducteurs 35A, 35B présentent une longueur de valeur supérieure à plusieurs centaines de mètres.

Le bus de circulation 16 est modélisé sous la forme d'une inductance de ligne 36 connectée en série avec une résistance de ligne 38, et un condensateur de ligne 40 connecté entre les conducteurs 35A, 35B du côté de la résistance de ligne 38, comme représenté sur la figure 2. Autrement dit, le bus de circulation 16 est modélisé sous la forme d'un tronçon en pi.

Le bus de circulation 16 est propre à permettre la circulation d'un courant présentant une tension de valeur supérieure à 1 kV, par exemple supérieure à 5 kV, par exemple encore supérieure à 10 kV.

Le convertisseur principal 18 est un convertisseur unidirectionnel de courant, propre à permettre la circulation du courant suivant un unique sens depuis la génératrice 14 vers le bus de circulation 16. Dans le mode de réalisation décrit, le convertisseur principal 18 est un convertisseur de courant continu en un autre courant continu.

Le convertisseur principal 18 comporte un pont en H commandé 42 formant onduleur de tension, connecté en entrée d'un premier transformateur de tension 44, lui-même connecté en entrée d'un pont de diodes 46 formant redresseur de tension. Le pont en H 42 est connecté aux premières bornes 30, et le pont de diodes 46 est connecté au filtre passif 24 afin d'être relié au bus de circulation 16.

Le système d'alimentation 20 comprend, d'une part, un convertisseur auxiliaire 48 connecté entre la génératrice 14 et le ou les équipement(s) auxiliaire(s) 22, et d'autre part, un dispositif 50 d'injection d'une tension additionnelle alternative en la deuxième extrémité 34 du bus de circulation, le bus de circulation 16 et un dispositif 52 de récupération, en la première extrémité 33 du bus, de la tension additionnelle alternative injectée, comme représenté sur la figure 1.

En complément, le système d'alimentation 20 comprend un dispositif 54 de conversion de la tension additionnelle alternative en une tension continue, lorsque la tension d'alimentation de l'équipement auxiliaire 22 est une tension continue.

L'équipement auxiliaire 22 nécessite d'être alimenté en permanence, par exemple en courant continu.

Le filtre passif 24 comporte une inductance de filtrage 54 connectée en sortie du convertisseur principal 18 et un deuxième condensateur de filtrage 56 connecté entre les conducteurs 35 du bus au niveau de la première extrémité 33.

L'onduleur de tension 26 est connu en soi, et est propre à convertir le courant continu circulant sur le bus 16 en un courant alternatif délivré au réseau 12. Dans l'exemple de réalisation des figures 1 et 2, le réseau 12 est un réseau triphasé, et l'onduleur 26 est alors un onduleur triphasé.

L'onduleur 26 est, par exemple, un onduleur de type NPP (de l'anglais *Neutral Point Piloted*). En variante, l'onduleur 26 est un onduleur de type NPC (de l'anglais *Neutral Point Clamped*).

Le convertisseur auxiliaire 48 est connecté, d'une part, aux premières bornes 30, et d'autre part, à l'équipement auxiliaire 22.

Le convertisseur auxiliaire 48 est un convertisseur unidirectionnel propre à permettre la circulation du courant suivant un unique sens, depuis la source de courant 29 vers l'équipement auxiliaire 22. Le convertisseur auxiliaire 48 est propre à délivrer un courant continu à l'équipement auxiliaire 22.

Dans le mode de réalisation décrit, le convertisseur auxiliaire 48 est un convertisseur de courant continu en un autre courant continu, la source de courant 29 étant une source de courant continu.

Le convertisseur auxiliaire 48 comporte un module de conversion unidirectionnel continu-continu 58 et un troisième condensateur de filtrage 60 connecté en sortie du module continu-continu 58, c'est-à-dire entre le module de conversion 58 et l'équipement auxiliaire 22.

Le dispositif d'injection 50 est connecté à la deuxième extrémité 34 du bus de circulation. Dans l'exemple de réalisation de la figure 2, le dispositif d'injection 50 est relié au conducteur positif 35A du bus de circulation.

Dans l'exemple de réalisation de la figure 2, le dispositif d'injection 50 comporte des moyens commandables 62 de liaison électrique avec une source de tension alternative 64.

Les moyens commandables de liaison 62 comportent une liaison filaire 66 entre la source de tension alternative 64 et le bus de circulation 16, et un sectionneur 68 mobile entre une position ouverte et une position fermée, le sectionneur 68 étant propre, en position fermée, à court-circuiter la liaison filaire 66.

En complément, les moyens commandables de liaison 62 comportent un deuxième transformateur de tension 70 connecté entre la source de tension alternative 64 et le bus de circulation 16.

En variante, le dispositif d'injection 50 est formé par l'onduleur de tension 26 propre à délivrer une tension additionnelle alternative à partir du réseau 12 auquel il est relié.

Le dispositif de récupération 52 est connecté au bus de circulation 16 en dérivation par rapport au convertisseur principal 18 et au filtre passif 24. Le dispositif de récupération 52 est connecté à la première extrémité 33 du bus de circulation via des deuxièmes bornes 71.

Le dispositif de récupération 52 comporte un filtre 72 de suppression de la composante continue d'une tension.. Le filtre de suppression 72 est propre à supprimer la composante continue de la tension en la première extrémité 33. Le filtre de suppression 72 comporte, par exemple, un condensateur 74 propre à supprimer ladite composante continue. Le condensateur 74 est de préférence connecté à la deuxième borne 71 correspondant au conducteur positif 35A.

En complément, le dispositif de récupération 52 comporte un troisième transformateur de tension 76 connecté en sortie du filtre de suppression 72. Dans l'exemple de réalisation de la figure 2, le troisième transformateur 76 est connecté entre le filtre de suppression 72 et le dispositif de conversion 54.

Le dispositif de récupération 52 est propre à alimenter l'équipement auxiliaire 22 en courant électrique, notamment lorsque la génératrice 14 ne fournit pas de courant et que l'équipement auxiliaire 22 n'est alors plus alimenté via le convertisseur auxiliaire 48.

Le dispositif de récupération 52 est agencé dans un boîtier de protection, non représenté, le boîtier de protection étant destiné à être immergé. Le dispositif de récupération 52 est, par exemple, disposé dans de l'huile à l'intérieur du boîtier de protection.

Le dispositif de conversion 54 est connecté entre le dispositif de récupération 52 et l'équipement auxiliaire 22. Le dispositif de conversion 54 est propre à convertir la tension additionnelle alternative issue du dispositif de récupération 52 en une tension continue, afin de fournir une tension continue à l'équipement auxiliaire 22.

Dans l'exemple de réalisation de la figure 2, le dispositif de conversion 54 comporte un pont de diodes 78. En complément, le dispositif de conversion 54 comporte un condensateur de filtrage, non représenté, connecté en sortie du pont de diodes 78. Le pont de diodes 78 est connecté entre le troisième transformateur 76 et l'équipement auxiliaire 22.

Le dispositif de conversion 54 est agencé dans un boîtier de protection, non représenté, le boîtier de protection étant destiné à être immergé. Le dispositif de conversion 54 est, par exemple, disposé dans un bain d'huile à l'intérieur du boîtier de protection.

Le convertisseur auxiliaire 48, le dispositif de récupération 52, et le dispositif de conversion 54 sont connectés en parallèle du convertisseur principal 18, entre les premières bornes 30, d'une part, et les deuxièmes bornes 71, d'autre part.

Le fonctionnement de la centrale de production 10 et du système d'alimentation 20 va être à présent expliqué.

Lorsque la génératrice de courant 14 délivre du courant via sa source de courant 29, celui-ci circule principalement à travers le convertisseur principal 18, le filtre passif 24, le bus de circulation 16 et enfin l'onduleur de tension 26, afin d'être délivré au réseau triphasé 12.

Le courant électrique fourni par la génératrice de courant 14 est également dérivé vers le convertisseur auxiliaire 48 afin d'alimenter le ou les équipement(s) auxiliaire(s) 22.

Autrement dit, lorsque la génératrice 14 produit un courant électrique, celui-ci sert à alimenter, d'une part, le réseau électrique 12, et d'autre part, le ou les équipement(s) auxiliaire(s) 22 via le convertisseur auxiliaire 48.

Le sectionneur 68 est en position fermée, afin de permettre la circulation du courant sur le conducteur positif 35A depuis la source de courant 29 vers le réseau 12. La liaison filaire 66 du dispositif d'injection est alors court-circuitée par le sectionneur 68.

Lorsque la génératrice 14 ne produit pas de courant, par exemple lorsque le rotor de l'hydrolienne ou de l'éolienne est à l'arrêt, le ou les équipement(s) auxiliaire(s) 22 ne sont plus alimentés via le convertisseur auxiliaire 48.

Le sectionneur 68 est alors commandé de sa position fermée vers sa position ouverte, afin de permettre l'injection d'une tension additionnelle alternative depuis la source de tension alternative 64, à travers le deuxième transformateur de tension 70, jusqu'au bus de circulation 16.

La tension alternative injectée sur le bus de circulation 16 est présente depuis la deuxième extrémité 34 jusqu'à la première extrémité 33 à travers les conducteurs 35A, 35B, puis est récupérée en les deuxièmes bornes 71 au niveau de la première extrémité 33 par le dispositif de récupération 52.

Le dispositif de récupération 52 filtre la composante continue de la tension du bus de circulation 16 à l'aide du filtre de suppression 72 afin de ne conserver qu'une composante alternative, c'est-à-dire de récupérer la tension additionnelle alternative injectée par le dispositif d'injection 50.

La tension additionnelle alternative est ensuite adaptée au niveau de tension souhaité via le troisième transformateur de tension 76. Le dispositif de conversion 54 convertit enfin la tension additionnelle alternative récupérée via le dispositif de récupération 52 en une tension continue, afin d'alimenter le ou les équipement(s) auxiliaire(s) 22.

Lorsque la génératrice 14 produit à nouveau du courant, le sectionneur 68 est à nouveau commandé de sa position ouverte vers sa position fermée, le ou les équipement(s) auxiliaire(s) 22 étant alors alimentés via le convertisseur auxiliaire 48.

Le système d'alimentation 20 permet donc d'alimenter le ou les équipement(s) auxiliaire(s) 22 en permanence, y compris lorsque la génératrice 14 ne délivre aucun courant.

En outre, le dispositif de récupération 52 et le dispositif de conversion 54 ne comportent aucun composant commandable, ce qui améliore la fiabilité et la maintenance du système d'alimentation 20, le dispositif de récupération 52 et le dispositif de conversion 54 étant destinés à être agencés dans un ou plusieurs boitiers immergés et/ou isolés et difficilement accessibles.

Le système d'alimentation 20 selon l'invention permet ainsi d'alimenter le ou les équipement(s) auxiliaire(s) 22 lorsque la génératrice 14 ne produit aucun courant, en l'absence d'une liaison filaire additionnelle spécifique entre un réseau électrique terrestre et le ou les équipement(s) 22.

On conçoit ainsi que le système d'alimentation 20 selon l'invention permet d'alimenter le ou les équipement(s) auxiliaire(s) 22 lorsque la source de courant 28 connectée en entrée du convertisseur auxiliaire 48 ne fournit pas de courant, tout en n'ayant pas à déployer une liaison filaire électrique spécifique entre le ou les équipement(s) auxiliaire(s) 22 et un réseau électrique terrestre.

## Revendications

1. Système (20) d'alimentation électrique d'une charge (22), le système (20) comprenant :
- un convertisseur (48) propre à être relié en entrée à une source de courant (14, 29) et en sortie à la charge (22), le convertisseur (48) étant propre à délivrer un courant continu à la charge (22) et à permettre la circulation du courant suivant un unique sens, depuis la source (14, 29) de courant vers la charge (22),
- un bus (16) de circulation d'un courant électrique, comportant une première extrémité (33) et une deuxième extrémité (34), **caractérisé en ce qu'**il comprend en outre :
- un dispositif (50) d'injection d'une tension additionnelle alternative en la deuxième extrémité (34) du bus de circulation (16), le dispositif d'injection (50) étant connecté à ladite deuxième extrémité (34), et
- un dispositif (52) de récupération de la tension additionnelle alternative injectée, le dispositif de récupération (52) étant connecté entre la première extrémité (33) du bus et la charge (22), afin d'alimenter la charge (22) en courant électrique, dans lequel le dispositif de récupération (52) comporte un filtre (72) de suppression de la composante continue d'une tension et un transformateur alternatif (76) connecté en sortie du filtre (72).

2. Système (20) selon la revendication 1, dans lequel le dispositif d'injection (50) comporte des moyens commandables (62) de liaison électrique avec une source de tension alternative (64).

3. Système (20) selon la revendication 2, dans lequel les moyens commandables de liaison (62) comportent une liaison filaire (66) entre la source de tension alternative (64) et le bus de circulation (16), et un sectionneur (68) mobile entre une position ouverte et une position fermée et propre à court-circuiter la liaison filaire (66) en position fermée.

4. Système (20) selon la revendication 2 ou 3, dans lequel les moyens commandables de liaison (62) comportent un transformateur alternatif (70) connecté entre la source de tension alternative (64) et le bus de circulation (16).

5. Système (20) selon la revendication 1, dans lequel le dispositif d'injection (50) comporte un onduleur de tension (26) connecté à la deuxième extrémité du bus de circulation, l'onduleur (26) étant propre à délivrer la tension additionnelle alternative à partir d'un réseau (12) auquel il est destiné à être relié.

6. Système (20) selon l'une quelconque des revendications précédentes, dans lequel le filtre (72) de suppression comporte un condensateur (74).

7. Système (20) selon l'une quelconque des revendications précédentes, dans lequel le système (20) comprend en outre un dispositif (54) de conversion de la tension additionnelle alternative en une tension continue, le dispositif de conversion (54) étant connecté entre le dispositif de récupération (52) et la charge (22), afin d'alimenter la charge (22) en courant continu.

8. Système (20) selon la revendication 7, dans lequel le dispositif de conversion (54) comporte un pont de diodes (78) connecté en sortie du dispositif de récupération (52).

9. Système (20) selon la revendication 8, dans lequel le dispositif de conversion (54) comporte en outre un condensateur de filtrage connecté en sortie du pont de diodes (78).

10. Centrale (10) de production d'énergie électrique propre à être reliée à un réseau électrique (12), la centrale de production (10) comprenant :
- une génératrice (14) de courant électrique,
- un bus (16) de circulation du courant électrique, connecté entre la génératrice (14) et le réseau (12), et
- un système (20) d'alimentation électrique d'un équipement auxiliaire (22), **caractérisée en ce que** le système d'alimentation (20) est conforme à l'une quelconque des revendications précédentes, le bus de circulation (16) connecté entre la génératrice (14) et le réseau (12) formant le bus du système d'alimentation (20).

11. Centrale (10) selon la revendication 10, dans laquelle la centrale (10) comprend en outre un convertisseur unidirectionnel de courant (18), connecté entre la génératrice (14) et le bus de circulation (16), et propre à permettre la circulation du courant suivant un unique sens, depuis la génératrice (14) vers le bus (16).

## Patentansprüche

1. System (20) zur Versorgung einer elektrischen Last (22), wobei das System aufweist:
- einen Wandler (48), der dazu eingerichtet ist, eingangsseitig mit einer Stromquelle (14, 29) und ausgangsseitig mit der Last (22) verbunden zu werden, wobei der Wandler (48) dazu eingerichtet ist, einen Gleichstrom an die Last (22) abzugeben und einen Stromfluss in eine einzige Richtung von der Stromquelle (14, 29) zu der Last (22) zu erlauben,
- einen Bus (16) für den Stromfluss eines elektrischen Stromes, aufweisend ein erstes Ende (33) und ein zweites Ende (34), **dadurch gekennzeichnet, dass** es unter anderem aufweist:
- eine Einrichtung (50) zum Einspeisen einer Zusatzwechselspannung in das zweite Ende (34) des Busses (16) für den Stromfluss, wobei die Einrichtung zum Einspeisen (50) mit dem zweiten Ende (34) verbunden ist, und
- eine Einrichtung (52) zur Wiedergewinnung der eingespeisten Zusatzwechselspannung, wobei die Einrichtung zur Wiedergewinnung (52) zwischen das erste Ende (33) des Busses und die Last (22) geschaltet ist, um die Last (22) mit einem elektrischen Strom zu versorgen, bei dem die Einrichtung zur Wiedergewinnung (52) einen Filter (72) zur Unterdrückung des Gleichspannungsanteils und einen Wechselstromtransformator (76) aufweist, der mit dem Ausgang des Filters (72) verbunden ist.

2. System (20) nach Anspruch 1, bei dem die Einrichtung zur Einspeisung (50) ansteuerbare Mittel (62) aufweist, zur elektrischen Verbindung mit einer Wechselspannungsquelle (64).

3. System (20) nach Anspruch 2, bei dem die steuerbaren Verbindungsmittel (62) eine Drahtverbindung (66) zwischen der Wechselspannungsquelle (64) und dem Bus (16) für den Stromfluss und einen Trennschalter (68) aufweist, der zwischen einer offenen Position und einer geschlossenen Position bewegbar ist und dazu eingerichtet ist, die Drahtverbindung (66) in der geschlossenen Verbindung kurzzuschließen.

4. System (20) nach Anspruch 2 oder 3, bei dem die steuerbaren Verbindungsmittel (62) einen Wechselspannungstransformator (70) aufweisen, der zwischen die Wechselspannungsquelle (64) und den Bus (16) für den Stromfluss geschaltet ist.

5. System (20) nach Anspruch 1, bei dem die Einrichtung zum Einspeisen (50) einen Spannungswechselrichter (26) aufweist, der an das zweite Ende des Busses für den Stromfluss angeschlossen ist, wobei der Wechselrichter (26) dazu eingerichtet ist, die Zusatzwechselspannung an ein Netz (12) abzugeben, an das verbunden zu werden er bestimmt ist.

6. System (20) nach irgendeinem der vorhergehenden Ansprüche, bei dem der Filter (72) zur Unterdrückung einen Kondensator (74) aufweist.

7. System (20) nach irgendeinem der vorhergehenden Ansprüche, bei dem das System (20) außerdem eine Einrichtung (54) zur Wandlung der Zusatzwechselspannung in eine Gleichspannung aufweist, wobei die Einrichtung zur Umwandlung (54) zwischen die Einrichtung zur Wiedergewinnung (52) und die Last (22) geschaltet ist, um die Last (22) mit einem Gelichstrom zu versorgen.

8. System (20) nach Anspruch 7, bei dem die Einrichtung zur Umwandlung (54) eine Diodenbrücke (78) aufweist, die an den Ausgang der Einrichtung zur Wiedergewinnung (52) angeschlossen ist.

9. System (20) nach Anspruch 8, bei dem die Einrichtung zur Umwandlung (54) außerdem einen Filterkondensator aufweist, der mit dem Ausgang der Diodenbrücke (78) verbunden ist.

10. Zentrale (10) zur Energieerzeugung, die dazu eingerichtet ist, mit einem elektrischen Netz (12) verbunden zu werden, wobei die Zentrale zur Energieerzeugung (10) aufweist:
- einen Stromgenerator (14),
- einen Bus (16) für den Stromfluss eines elektrischen Stromes, der zwischen den Generator (14) und das Netz (12) geschaltet ist, und
- ein System (20) zur elektrischen Versorgung einer Zusatzeinrichtung (22), **dadurch gekennzeichnet, dass** das System zur Versorgung (20) irgendeinem der vorhergehenden Ansprüche entspricht, wobei der Bus (16) für den Stromfluss, der zwischen den Generator (14) und das Netz (12) geschaltet ist, den Bus des Systems zur Versorgung (20) bildet.

11. Zentrale (10) nach Anspruch 10, bei der die Zentrale (10) außerdem einen unidirektionalen Stromwandler (18) aufweist, der zwischen den Generator (14) und den Bus (16) für den Stromfluss geschaltet und dazu eingerichtet ist, den Stromfluss in eine einzige Richtung von dem Generator (14) zu dem Bus (16) zu erlauben.

## Claims

1. System (20) for supplying electrical power to a load (22), the system (20) comprising:
- a converter (48) able to be connected at the input to a current source (14, 29) and at the output to the load (22), the converter (48) being able to supply a continuous current to the load (22) and allow the flow of current in a single direction from the current source (14, 29) to the load (22),
- a circulation bus (16) for the electrical current, comprising a first end (33) and a second end (34),
**characterized in that** it also comprises:
- a device (50) for injecting an additional alternating voltage at the second end (34) of the circulation bus (16), the injection device (50) being connected to said second end (34), and
- a device (52) for recovering the injected additional alternating voltage, the recovery device (52) being connected between the first end (33) of the bus and the load (22) in order to supply the load (22) with electrical current, wherein the recovery device (52) comprises a filter (72) for suppressing the continuous component of a voltage and an alternating transformer (76) connected in series at the output from the filter (72).

2. System (20) according to claim 1, wherein the injection device (50) comprises controllable means (62) of electrical connection to an alternating voltage source (64).

3. System (20) according to claim 2, wherein the controllable connection means (62) comprises a wired connection (66) between the alternating voltage source (64) and the circulation bus (16), and a switch (68) which is movable between an open position and a closed position and able to short-circuit the wired connection (66) in the closed position.

4. System (20) according to claim 2 or 3, wherein the controllable connection means (62) comprises an alternating transformer (70) connected between the alternating voltage source (64) and the circulation bus (16).

5. System (20) according to claim 1, wherein the injection device (50) comprises a voltage inverter (26) connected to the second end of the circulation bus, the inverter (26) being able to supply the additional alternating voltage from a network (12) to which it is intended to be connected.

6. System (20) according to any of the preceding claims, wherein the suppression filter (72) comprises a capacitor (74).

7. System (20) according to any of the preceding claims, wherein the system (20) also comprises a device (54) for converting the additional alternating voltage into a continuous voltage, the conversion device (54) being connected between the recovery device (52) and the load (22) in order to supply the load (22) with continuous current.

8. System (20) according to claim 7, wherein the conversion device (54) comprises a diode bridge (78) connected at the output from the recovery device (52).

9. System (20) according to claim 8, wherein the conversion device (54) also comprises a filtering capacitor connected at the output from the diode bridge (78).

10. Electrical energy production plant (10) able to be connected to an electrical network (12), the production plant (10) comprising:
- an electrical current generator (14),
- a circulation bus (16) for the electrical current, connected between the generator (14) and the network (12), and
- a system (20) for supplying electrical power to auxiliary equipment (22), **characterized in that** the supply system (20) is in accordance with any of the preceding claims, the circulation bus (16) connected between the generator (14) and the network (12) forming the bus of the supply system (20).

11. Plant (10) according to claim 10, wherein the plant (10) also comprises a unidirectional current converter (18) connected between the generator (14) and the circulation bus (16) and able to allow current to flow in a single direction from the generator (14) to the bus (16).
